# EUROPEAN PATENT SPECIFICATION

(11) **EP 4 397 555 B1**
(45) Date of publication and mention of the grant of the patent: **03.09.2025**
(21) Application number: 23213263.9
(22) Date of filing: 30.11.2023
(51) Int. Cl.: B60W 30/06, B60W 30/12, B60W 30/18, B60W 60/00, B62D 15/02

(54) **SOFTWARE ARCHITECTURE PLATFORM AND CONTROL METHOD FOR AUTONOMOUS VEHICLE, VEHICLE, AND MEDIUM**
SOFTWAREARCHITEKTURPLATTFORM UND STEUERUNGSVERFAHREN FÜR AUTONOMES FAHRZEUG, FAHRZEUG UND MEDIUM
PLATEFORME D'ARCHITECTURE LOGICIELLE ET PROCÉDÉ DE COMMANDE POUR VÉHICULE AUTONOME, VÉHICULE ET SUPPORT

(30) Priority: 03.01.2023 CN 202310009347
(43) Date of publication of application: 10.07.2024
(73) Proprietor: Chongqing Changan Automobile Co., Ltd., Chongqing 400023 (CN)
(72) Inventor: QIU, Lihong, Chongqing 400023 (CN); HE, Gang, Chongqing 400023 (CN); YANG, Dongfang, Chongqing 400023 (CN); LI, Zhen, Chongqing 400023 (CN); QIAO, Ruizhi, Chongqing 400023 (CN)
(74) Representative: M. Zardi & Co S.A.

(56) References cited:
- CN-A- 115 432 008
- US-A1- 2019 286 151
- JOHN LEONARD ET AL: "A perception-driven autonomous urban vehicle", JOURNAL OF FIELD ROBOTICS, vol. 25, no. 10, 1 October 2008 (2008-10-01), pages 727 - 774, XP055179322, ISSN: 1556-4959, DOI: 10.1002/rob.20262

## Description

### Field of the Invention

The invention relates to the technical field of autonomous driving application layer algorithms, and in particular, to a software architecture platform and control method for an autonomous vehicle, a vehicle, and a medium.

### Background of the Invention

Currently, dominant autonomous vehicles that have been mass-produced generally have driving and parking functions, but driving and parking are generally developed based on different architectures and deployed on different domain controllers. As a result, the driving and parking software architectures cannot be shared, software modules cannot be shared, and computing resources cannot be shared, resulting in a waste of hardware cost and an increase of development labor costs.

From the perspective of user experience, current dominant autonomous driving products mainly cover a highway scenario and a garage parking scenario, cannot realize continuity from a home garage to a company garage or any point A to point B, and cannot support software self-evolution.

CN115432008A discloses an automated driving decision planning method based on optimized multitasking. The method comprises: acquiring upstream input data, and performing safety check on the upstream input data, and performing data structure conversion on the upstream input data; storing the upstream input data and the upstream input data converted by the data structure locally or in the cloud; extracting candidate lane sets from the high-precision map data and the perceptual data, providing traffic semantic information, and performing self-checking on the high-precision map data and the perceptual data by a tool method, and meanwhile performing cognitive grading on the high-precision map data and the perceptual data based on data types and quality. The proposed solution, however, does not solve the above-mentioned problems.

### Summary of the Invention

The invention provides a software architecture platform and control method for an autonomous vehicle, a vehicle, and a medium to solve the problems that continuity in daily travel scenario experience cannot be realized, a driving software architecture and a parking software architecture cannot be shared, software scheduling efficiency is low, and the like in the related art.

Embodiments of a first aspect of the invention provide a software architecture platform for an autonomous vehicle, where the vehicle is provided with a preset driving function and a preset parking function, and the platform is configured to control the vehicle to implement the preset driving function and the preset parking function, and includes: an acquisition module, configured to acquire local environmental information and target or obstacle timing information perceived by the vehicle, as well as running state information and a decision scenario of the vehicle; a prediction module, configured to call, according to the running state information and the decision scenario, a prediction algorithm that meets a current scenario, and perform, based on the prediction algorithm, trajectory prediction on the local environmental information and the target or obstacle timing information to generate a predicted trajectory of a target around the vehicle; a decision module, configured to call, according to the decision scenario, a decision algorithm that meets the current scenario, and make, based on the decision algorithm, a decision on body information, a map, location information and the predicted trajectory of the vehicle to obtain a reference trajectory, a reference trajectory boundary, reference velocity and a reference velocity boundary for driving or parking; a planning module, configured to call, according to the decision scenario, a planning algorithm that meets the current scenario, perform trajectory planning on the reference trajectory and the reference trajectory boundary by using the planning algorithm to generate an optimal trajectory for the driving or parking, and perform velocity planning on the reference velocity and the reference velocity boundary by using the planning algorithm to generate optimal velocity for the driving or parking; a control module, configured to call, according to the decision scenario, a control algorithm that meets the current scenario, and control, by using the control algorithm according to the optimal trajectory and the optimal velocity, the vehicle to execute a preset driving action or a preset parking action to implement autonomous driving and/or autonomous parking of the vehicle.

In the invention, according to the above-mentioned technical means, the prediction algorithm suitable for the current scenario can be called according to a system running state of the vehicle and the decision scenario, and the predicted trajectory of the target around the vehicle is generated by combining the environmental information of the vehicle with the target or obstacle timing information, and the optimal trajectory and the optimal velocity for the driving or parking of the vehicle are planned by using information such as the body information and map location of the vehicle, thereby implementing the autonomous driving and/or autonomous parking of the vehicle. Through a driving and parking integrated planning control architecture employed, the same software architecture is used in driving and parking. A corresponding algorithm is called based on each scenario, such that architecture sharing and module sharing can be implemented, the consumption of computing resources can be reduced, the number and cost of controllers can be reduced, and the labor cost can be reduced. Moreover, by configuration files, platform-based algorithms can be applied to controllers and vehicle models with different computing power, a platform-based development mode can be implemented, and the development efficiency can be improved.

Optionally, in one embodiment of the invention, a scenario recognition module is provided for judging a current decision scenario according to a vehicle driving environment, the decision scenario including one or more of a lane following scenario, an intersection scenario, a garage driving scenario, a garage parking scenario and a turn-round scenario, the scenarios belonging to a driving decision-type scenario and a parking decision-type scenario, the driving decision-type scenario including the lane following scenario, the intersection scenario, the garage driving scenario and the turn-round scenario, and the parking decision-type scenario including the garage parking scenario, where

if the vehicle meets a preset turn-round scenario condition, the vehicle enters the turn-round scenario, and then, a prediction algorithm, a decision algorithm, a planning algorithm and a control algorithm required by the turn-round scenario are called;
if the vehicle meets a preset intersection scenario condition, the vehicle enters the intersection scenario, and then, a prediction algorithm, a decision algorithm, a planning algorithm and a control algorithm required by the intersection scenario are called;
if the vehicle meets a preset garage driving scenario condition, the vehicle enters the garage scenario, and then, a prediction algorithm, a decision algorithm, a planning algorithm and a control algorithm required by the garage driving scenario are called; and
if the vehicle meets a preset parking scenario condition, the vehicle enters the garage parking scenario, and then, a prediction algorithm, a decision algorithm, a planning algorithm and a control algorithm required by the turn-round parking scenario are called.

According to the above-mentioned technical means, the decision scenarios of the embodiment of the invention include the lane following scenario, the intersection scenario, the garage driving scenario, the garage parking scenario and the turn-round scenario, and when a certain condition is met, a corresponding scenario is entered, and an optimal algorithm is called through scenario refinement, thereby improving continuity in daily travel scenario experience.

Optionally, in one embodiment of the invention, the decision module includes: a processing sub-module, configured to determine, based on an actual type of the map, a candidate lane set, screen a candidate lane that meets a preset condition in the candidate lane set, determine a candidate coordinate system and a boundary according to the candidate lane and a preset reference line, make a preset traffic rule decision according to the candidate coordinate system and the boundary to obtain a traffic rule decision result, and mark an obstacle around the vehicle to obtain a horizontal and vertical marked result of the obstacle; and a decision sub-module, configured to call, according to the decision scenario, a decision algorithm that meets the current scenario, make a decision on the traffic rule decision result and the horizontal and vertical marked result of the obstacle by using the decision algorithm, determine a path boundary constraint and a velocity boundary constraint in the candidate coordinate system, and perform trajectory planning and trajectory feature extraction according to the path boundary constraint and the velocity boundary constraint to obtain a reference trajectory, a reference trajectory boundary, reference velocity and a reference velocity boundary for driving or parking of the vehicle.

In the embodiment of the invention, according to the above-mentioned technical means, the reference trajectory and the reference velocity for the driving or parking of the vehicle can be outputted according to the decision module of the vehicle, and respective left and right boundary values are obtained, and path planning for the driving or parking of the vehicle is implemented by narrowing a reference range.

Optionally, in one embodiment of the invention, the processing sub-module is specifically configured to: process preprocessed data, if the map is a preset high-definition map, by using a strategy of the preset high-definition map and perceived information correction; and process preprocessed data, if the map is a preset crowd-sourcing map, by using a strategy of combining the preset crowd-sourcing map with the perceived information, where the preset crowd-sourcing map is a road prior information profile generated by combining traffic elements perceived in real time for multiple times.

According to the above-mentioned technical means, an environmental model sub-module of the embodiment of the invention can process outputs of candidate lanes when map sources are different, and realize a connection between an open road and a garage road based on perception of crowd-sourcing mapping, thereby realizing continuity experience in integrated driving and parking.

Optionally, in one embodiment of the invention, the strategy of combining the preset crowd-sourcing map with the perceived information includes: judging lane information of a current lane of the vehicle according to the preprocessed data; performing location check according to the lane information and the perceived information, determining a lane identifier of the current lane of the vehicle, and searching a navigation reference centerline by using the lane identifier to obtain a reference path sequence, and determining, based on the reference path sequence, a reference path centerline point positional relationship; performing mutual check and fusion according to the perceived information and the reference path centerline point positional relationship to obtain a left and right lane line relationship of the current lane, and performing mutual check and fusion according to the perceived information and the left and right lane line relationship to obtain lane attribute expansion information; and performing mutual check and fusion according to the perceived information, the lane attribute expansion information, a reference line centerline and boundary line point sequence, outputting a reference centerline and boundary sequence, and determining, based on the reference centerline and boundary sequence, a candidate lane set.

In the embodiment of the invention, according to the above-mentioned technical means, differences between a map and a real environment can be rapidly updated according to mapping with the perceived information when an actual road is updated, and it is guaranteed by multiple check fusion that the continuity is maintained when the crowd-sourcing map fails in a short time or an element is abnormal.

Optionally, in one embodiment of the invention, the prediction module includes: a data preprocessing sub-module, configured to preprocess the environmental information and the target or obstacle timing information to obtain target information and preprocessed environmental information; a task scheduling sub-module, configured to call, according to the running state information and the decision scenario, a prediction algorithm that meets a current scenario; and a prediction algorithm sub-module, configured to perform, based on the prediction algorithm, destination prediction, intention prediction and deep learning-based trajectory prediction on the target information and the preprocessed environmental information to obtain a predicted destination, a target intention and a model generation trajectory, and to obtain, based on the predicted destination and the target intention, a rule generation trajectory, and perform trajectory processing on the model generation trajectory and the rule generation trajectory to obtain a predicted trajectory of a target around a vehicle.

In the embodiment of the invention, according to the above-mentioned technical means, the predicted trajectory of the target around the vehicle can be obtained according to the local environmental information and the target or obstacle timing information perceived by the vehicle, as well as the running state information of the vehicle and the decision scenario, and a running trajectory and velocity for driving or parking of the vehicle can be further determined by combining the body information, the map and the location information of the vehicle.

Optionally, in one embodiment of the invention, the task scheduling sub-module is specifically configured to call a preset driving prediction algorithm if the vehicle is in a preset lane following scenario, where the vehicle enters the preset lane following scenario when a distance of the vehicle from a garage exit in a driving direction is less than a first threshold; and call a preset garage driving scenario prediction algorithm if the vehicle is in a preset garage driving scenario, where the vehicle enters the preset garage driving scenario when a distance of the vehicle from a garage entrance in the driving direction is less than a second threshold.

In the embodiment of the invention, according to the above-mentioned technical means, a driving scenario of the vehicle can be judged according to the driving direction of the vehicle and the distance from the garage entrance, thereby calling different driving prediction algorithms to realize continuity experience of a user.

Optionally, in one embodiment of the invention, the prediction module further includes: a data triggering sub-module, configured to trigger and record preset scenario data and problem data, and uploading triggered data to a server to implement data loop closing.

In the embodiment of the invention, according to the above-mentioned technical means, a real vehicle algorithm can be verified and the data can be analyzed by means of data loop closing, thereby improving the accuracy and applicability of the algorithm.

Optionally, in one embodiment of the invention, the planning module includes: a trajectory planning sub-module, configured to plan an optimal path according to the reference trajectory, the reference trajectory boundary, the predicted trajectory and the location information of the vehicle; and a velocity planning sub-module, configured to plan optimal velocity according to the optimal path, the reference velocity and the reference velocity boundary.

In the embodiment of the invention, according to the above-mentioned technical means, continuity experience from a home garage to a company garage or any point A to point B by planning a movement trajectory and driving velocity for driving or parking of the vehicle.

Optionally, in one embodiment of the invention, the control module employs a control architecture of combining feedforward and PID feedback, and the control architecture employs a dynamic change parameter-based dual-loop PID control algorithm.

In the embodiment of the invention, according to the above-mentioned technical means, functions under different scenarios can be implemented and the development efficiency can be improved through driving and parking integrated planning control architecture and an algorithm.

Embodiments of a second aspect of the invention provide a control method for an autonomous vehicle, where the method is applied to a vehicle, used for controlling the vehicle to implement a preset driving function and a preset parking function, and includes the steps of: acquiring local environmental information and target or obstacle timing information perceived by the vehicle, as well as running state information and a decision scenario of the vehicle; calling, according to the running state information and the decision scenario, a prediction algorithm that meets a current scenario, and performing, based on the prediction algorithm, trajectory prediction on the local environmental information and the target or obstacle timing information to generate a predicted trajectory of a target around the vehicle; calling, according to the decision scenario, a decision algorithm that meets the current scenario, and making, based on the decision planning algorithm, a decision on body information, a map, location information and the predicted trajectory of the vehicle to obtain a reference trajectory, a reference trajectory boundary, reference velocity and a reference velocity boundary for driving or parking; calling, according to the decision scenario, a planning algorithm that meets the current scenario, performing trajectory planning on the reference trajectory and the reference trajectory boundary by using the planning algorithm to generate an optimal trajectory for the driving or parking, and performing velocity planning on the reference velocity and the reference velocity boundary by using the planning algorithm to generate optimal velocity for the driving or parking; and calling, according to the decision scenario, a control algorithm that meets the current scenario, and controlling, by using the control algorithm according to the optimal trajectory and the optimal velocity, the vehicle to execute a preset driving action or a preset parking action to implement autonomous driving and/or autonomous parking of the vehicle.

Embodiments of a third aspect of the invention provide a vehicle, including an autonomous driving system; and a software architecture platform for an autonomous vehicle, where a preset driving function and a preset parking function of the autonomous driving system share the platform, and the platform is configured to acquire environmental information around the vehicle, target information, running state information and a decision scenario; call, according to the running state information and the decision scenario, a prediction algorithm that meets a current scenario, and perform, based on the prediction algorithm, trajectory prediction on the local environmental information and the target or obstacle timing information to generate a predicted trajectory of a target around the vehicle; call, according to the decision scenario, a decision algorithm that meets the current scenario, and make, based on the decision planning algorithm, a decision on body information, a map, location information and the predicted trajectory of the vehicle to obtain a reference trajectory, a reference trajectory boundary, reference velocity and a reference velocity boundary for driving or parking; call, according to the decision scenario, a planning algorithm that meets the current scenario, perform trajectory planning on the reference trajectory and the reference trajectory boundary by using the planning algorithm to generate an optimal trajectory for the driving or parking, and perform velocity planning on the reference velocity and the reference velocity boundary by using the planning algorithm to generate optimal velocity for the driving or parking; call, according to the decision scenario, a control algorithm that meets the current scenario, and control, by using the control algorithm according to the optimal trajectory and the optimal velocity, the vehicle to execute a preset driving action or a preset parking action to implement autonomous driving and/or autonomous parking of the vehicle.

A fourth aspect of the invention provides a computer-readable storage medium having a computer program stored thereon, the program being executed by a processor for implementing the control method for the autonomous vehicle as described in the above-mentioned embodiments.

Thus, the invention has at least the following beneficial effects:
1. In the invention, the prediction algorithm suitable for the current scenario can be called according to a system running state of the vehicle and the decision scenario, and the trajectory of the target around the vehicle is predicted by combining the environmental information of the vehicle with the target or obstacle timing information, and the optimal trajectory and the optimal velocity for the driving or parking of the vehicle are planned by using information such as the body information and map location of the vehicle, thereby implementing the autonomous driving and/or autonomous parking of the vehicle. Through a driving and parking integrated planning control architecture employed, the same software architecture is used in driving and parking. A corresponding algorithm is called based on each scenario, such that architecture sharing and module sharing can be implemented, the consumption of computing resources can be reduced, the number and cost of controllers can be reduced, and the labor cost can be reduced. Moreover, by configuration files, platform-based algorithms can be applied to controllers and vehicle models with different computing power, a platform-based development mode can be implemented, and the development efficiency can be improved.
2. The decision scenarios of the embodiment of the invention include the lane following scenario, the intersection scenario, the garage driving scenario, the garage parking scenario and the turn-round scenario, and when a certain condition is met, a corresponding scenario is entered, and an optimal algorithm is called through scenario refinement, thereby improving continuity in daily travel scenario experience.
3. In the embodiment of the invention, the reference trajectory and the reference velocity for the driving or parking of the vehicle can be outputted according to the decision module of the vehicle, and respective left and right boundary values are obtained, and path planning for the driving or parking of the vehicle is implemented by narrowing a reference range.
4. An environmental model sub-module of the embodiment of the invention can process outputs of candidate lanes when map sources are different, and realize a connection between an open road and a garage road based on perception of crowd-sourcing mapping, thereby realizing continuity experience in integrated driving and parking.
5. In the embodiment of the invention, differences between a map and a real environment can be rapidly updated according to mapping with the perceived information when an actual road is updated, and it is guaranteed by multiple check fusion that the continuity is maintained when the crowd-sourcing map fails in a short time or an element is abnormal.
6. In the embodiment of the invention, the predicted trajectory of the target around the vehicle can be obtained according to the local environmental information and the target or obstacle timing information perceived by the vehicle, as well as the running state information of the vehicle and the decision scenario, and a running trajectory and velocity for driving or parking of the vehicle can be further determined by combining the body information, the map and the location information of the vehicle.
7. In the embodiment of the invention, a driving scenario of the vehicle can be judged according to the driving direction of the vehicle and the distance of the vehicle from the garage entrance, thereby calling different driving prediction algorithms to realize continuity experience of a user.
8. In the embodiment of the invention, a real vehicle algorithm can be verified and the data can be analyzed by means of data loop closing, thereby improving the accuracy and applicability of the algorithm.
9. In the embodiment of the invention, continuity experience from a home garage to a company garage or any point A to point B by planning a movement trajectory and driving velocity for driving or parking of the vehicle.
10. In the embodiment of the invention, functions under different scenarios can be implemented and the development efficiency can be improved through driving and parking integrated planning control architecture and an algorithm.

Additional aspects and advantages of the invention will be given in part in the following description, some of which will become apparent from the following description or learned from the practice of the invention.

### Brief Description of the Drawings

The above-mentioned and/or additional aspects and advantages of the invention will become apparent and easily understood from the description of embodiments in conjunction with the accompanying drawings below. In the drawings:
Fig. 1 is a block diagram of a software architecture platform for an autonomous vehicle provided according to an embodiment of the invention;
Fig. 2 is an algorithm architecture diagram of a prediction module provided according to an embodiment of the invention;
Fig. 3 is a schematic diagram of switching between driving and parking provided according to an embodiment of the invention;
Fig. 4 is an architecture diagram of data loop closing provided according to an embodiment of the invention;
Fig. 5 is an architecture diagram of a decision scenario provided according to an embodiment of the invention;
Fig. 6 is an algorithm architecture diagram of a decision module provided according to an embodiment of the invention;
Fig. 7 is an architecture diagram of a crowd-sourcing map-based reference path generation provided according to an embodiment of the invention;
Fig. 8 is an algorithm architecture diagram of a planning module provided according to an embodiment of the invention;
Fig. 9 is an algorithm architecture diagram of a control module provided according to an embodiment of the invention;
Fig. 10 is a flowchart of a control method for an autonomous vehicle provided according to an embodiment of the invention; and
Fig. 11 is a block schematic diagram of a vehicle provided according to an embodiment of the invention.

Reference numerals: acquisition module-100, prediction module-200, decision module-300, planning module-400, control module-500, autonomous driving system-600, and software architecture platform for autonomous vehicle-10.

### Detailed Description of the Embodiments

Invention will be described in detail below, and examples of the embodiments are shown in the drawings, where the same or similar reference signs from beginning to end indicate the same or similar element or elements having the same or similar function. The embodiments described below with reference to the accompanying drawings are exemplary and intended to explain the invention, but cannot be understood as limiting the invention.

The software architecture platform and control method for the autonomous vehicle, the vehicle and the medium in the invention are described below with reference to the drawings. In view of the above-mentioned problems mentioned in the background, the invention provides a software architecture platform for an autonomous vehicle. In the platform, a prediction algorithm suitable for a current scenario is called according to a system running state and a decision scenario of the vehicle, and a predicted trajectory of a target around the vehicle is generated by combining environmental information of the vehicle with target or obstacle timing information, and an optimal trajectory and optimal velocity for driving or parking of the vehicle are planned by using information such as body information and map location of the vehicle, thereby implementing autonomous driving and/or autonomous parking of the vehicle. Through a driving and parking integrated planning control architecture employed, the same software architecture is used in driving and parking. A corresponding algorithm is called based on each scenario, such that architecture sharing and module sharing can be implemented, the consumption of computing resources can be reduced, the number and cost of controllers can be reduced, and the labor cost can be reduced. Moreover, by configuration files, platform-based algorithms can be applied to controllers and vehicle models with different computing power, a platform-based development mode can be implemented, and the development efficiency can be improved. Thus, the problems that continuity in daily travel scenario experience cannot be realized, software self-evolution cannot be supported, and the software scheduling efficiency is low and the like in the related art are solved.

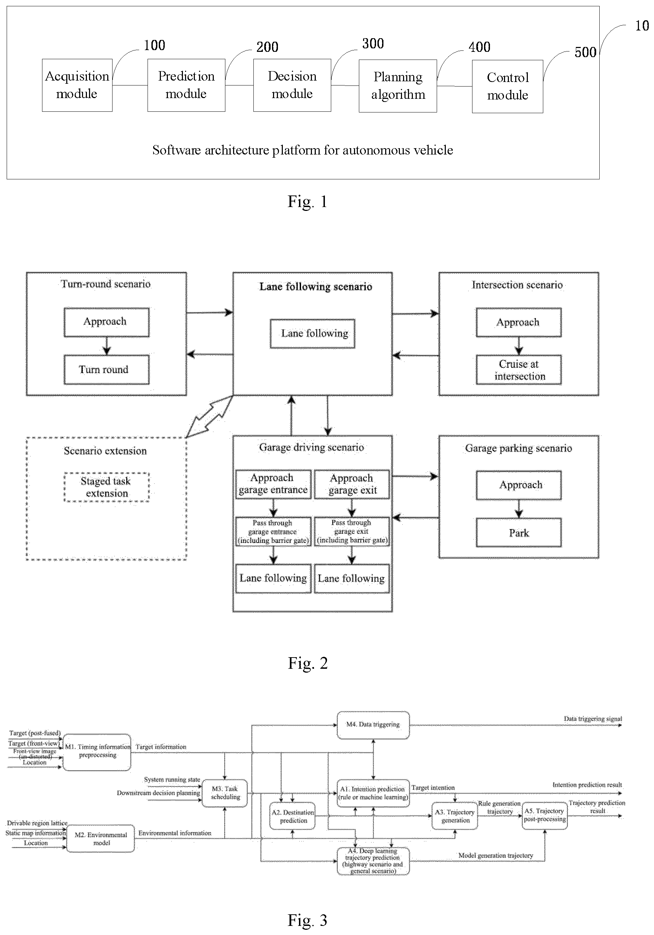

Specifically, Fig. 1 is a block diagram of a software architecture platform for an autonomous vehicle provided by an embodiment of the invention.

As shown in Fig. 1, the software architecture platform for the autonomous vehicle 10 includes: an acquisition module 100, a prediction module 200, a decision module 300, a planning module 400 and a control module 500.

The acquisition module 100 is configured to acquire local environmental information perceived by a vehicle, target or obstacle timing information, as well as running state information and a decision scenario of the vehicle; the prediction module 200 is configured to call, according to the running state information and the decision scenario, a prediction algorithm that meets a current scenario, and perform, based on the prediction algorithm, trajectory prediction on the local environmental information and the target or obstacle timing information to generate a predicted trajectory of a target around the vehicle; the decision module 300 is configured to call, according to the decision scenario, a decision algorithm that meets the current scenario, and make, based on the decision algorithm, a decision on body information, a map, location information and the predicted trajectory of the vehicle to obtain a reference trajectory, a reference trajectory boundary, reference velocity and a reference velocity boundary for driving or parking; the planning module 400 is configured to call, according to the decision scenario, a planning algorithm that meets the current scenario, perform trajectory planning on the reference trajectory and the reference trajectory boundary by using the planning algorithm to generate an optimal trajectory for the driving or parking, and perform velocity planning on the reference velocity and the reference velocity boundary by using the planning algorithm to generate optimal velocity for the driving or parking; and the control module 500 is configured to call, according to the decision scenario, a control algorithm that meets the current scenario, and control, by using the control algorithm according to the optimal trajectory and the optimal velocity, the vehicle to execute a preset driving action or a preset parking action to implement autonomous driving and/or autonomous parking of the vehicle.

It can be understood that the vehicle of the embodiment of the invention is provided with a preset driving function and a preset parking function, the software architecture platform for the autonomous vehicle is configured to control the vehicle to implement the preset driving function and the preset parking function, and through the prediction module, the decision module, the planning module, the control module and the like, scenario-based task scheduling can be implemented, and flexible scheduling of software modules can be implemented. Moreover, a corresponding algorithm is called based on each scenario, functions under different scenarios are implemented, and the continuity in the daily travel scenario experience is improved.

When architecture design is performed, in the embodiment of the invention, a running cycle of each module can be set according to actual situations, which will not be specifically limited. For example, the running cycle of the prediction module 200 can be set as 40 ms, the running cycle of the decision module 300 can be set as 50 ms, the running cycle of the planning module 400 can be set as 50 ms, and the running cycle of the control module 500 can be set as 20 ms. Meanwhile, allocation of computing resources in the embodiment of the invention can also be set according to actual situations, as an example, which is specifically described as follows:
1) a planning control CPU (central processing unit) resource occupancy rate is set as 30% of total computing power, and an internal memory occupancy rate is set as 20% of total internal memory; and GPU (graphics processing unit) AI computing power is set as 15%;
2) the prediction module has a CPU occupancy rate of 10%, and an internal memory occupancy rate of 8%, and GPUAI computing power is set as 15%;
3) the decision module has a CPU occupancy rate of 10%, and an internal memory occupancy rate of 5%, and GPUAI computing power is set as 0;
4) the planning module has a CPU occupancy rate of 8%, and an internal memory occupancy rate of 5%, and GPUAI computing power is set to 0; and
5) the control module has a CPU occupancy rate of 2%, and an internal memory occupancy rate of 2%, and GPUAI computing power is set as 0.

In an embodiment of the invention, the decision scenarios include one or more of a lane following scenario, an intersection scenario, a garage driving scenario, a garage parking scenario and a turn-round scenario. These scenarios belong to a driving decision-type scenario and a parking decision-type scenario, where the driving decision-type scenario includes the lane following scenario, the intersection scenario, the garage driving scenario and the turn-round scenario, and the parking decision-type scenario includes the garage parking scenario, an architecture of which is as shown in Fig. 2.

The turn-round scenario includes: a scenario of approaching a turn-round region and a scenario of entering a turn-round state;
the intersection scenario includes: approaching an intersection and cruising at the intersection;
the garage parking scenario includes: approaching parking space and start parking; and
the garage driving scenario includes: a scenario of entering a garage and a scenario of exiting the garage, where the scenario of entering a garage includes: approaching a garage entrance, passing through the garage entrance and performing lane following; the scenario of exiting the garage includes: approaching a garage exit, passing through the garage exit and performing lane following.

In the embodiment of the invention, a scenario recognition module is provided for judging a current decision scenario according to a vehicle driving environment, and a system default scenario can be set as a lane following scenario. When a vehicle meets a preset turn-round scenario condition, the vehicle is controlled to enter the turn-round scenario; when the vehicle meets a preset intersection scenario condition, the vehicle is controlled to enter the intersection scenario; when the vehicle meets a preset garage driving scenario condition, the vehicle is controlled to enter the garage scenario; and when the vehicle meets preset parking scenario condition time, the vehicle is controlled to enter the garage parking scenario. When a corresponding scenario is entered, an optimal algorithm required by the scenario is called through scenario refinement, thereby improving continuity in daily travel scenario experience.

In one embodiment of the invention, the prediction module 200 includes: a data preprocessing sub-module, a task scheduling sub-module and a prediction algorithm sub-module.

The data preprocessing sub-module is configured to preprocess environmental information and target or obstacle timing information to obtain target information and preprocessed environmental information; the task scheduling sub-module is configured to call, according to running state information and a decision scenario, a preset prediction driving algorithm or preset parking algorithm that meets a current scenario; and the prediction algorithm sub-module is configured to perform, based on the preset prediction driving algorithm or preset parking algorithm, the target information and the preprocessed environmental information, destination prediction, intention prediction and deep learning-based trajectory prediction to obtain a predicted destination, a target intention and a model generation trajectory, and to obtain, based on the predicted destination and the target intention, a rule generation trajectory, and perform trajectory processing on the model generation trajectory and the rule generation trajectory to obtain a predicted trajectory of a target around a vehicle.

Inputs of the prediction module 200 of the embodiment of the invention include: a post-fused target, a front-view target, a front-view un-distorted image, location, FreeSpace (drivable region), and static map information. Outputs of the prediction module include: a data triggering signal, a traffic participant intention, and a traffic participant trajectory. The prediction module 200 of the embodiment of the invention can obtain a predicted intention result and a predicted trajectory result of the vehicle through these three sub-modules such as the data preprocessing sub-module, the task scheduling sub-module, and the prediction algorithm sub-module.

Specifically, as shown in Fig. 3, the data preprocessing sub-module of the embodiment of the invention includes target or obstacle timing information preprocessing and environmental model information preprocessing. The target or obstacle timing information may include: a target (post-fused), a target (front-view), front-view (un-distorted), location information and the like, and the environmental information may include: a drivable region lattice, static map information, location information and the like. In the embodiment of the invention, the local environmental information and the target or obstacle timing information perceived by the vehicle are preprocessed by the data preprocessing sub-module. The task scheduling sub-module of the embodiment of the invention mainly calls a prediction algorithm suitable for a current scenario according to a system running state and a downstream decision scenario. The prediction algorithm sub-module of the embodiment of the invention can perform destination prediction and intention prediction by using the prediction algorithm for the current scenario and the processed environmental information and the target or obstacle timing information to obtain A1 intention prediction (planning or machine learning) and A2 destination prediction to further obtain the rule generation trajectory. The model generation trajectory may also be obtained according to A4 deep learning trajectory prediction, and the rule generation trajectory and the model generation trajectory are processed by A5 to obtain a trajectory predicted result of the vehicle. Meanwhile, an intention predicted result can also be obtained according to the A1 intention prediction (planning or machine learning).

In one embodiment of the invention, the task scheduling sub-module is specifically configured to call a preset driving prediction algorithm if a vehicle is in a preset lane following scenario, where the vehicle enters the preset lane following scenario when a distance of the vehicle from a garage exit in a driving direction is less than a first threshold; call a preset garage driving scenario prediction algorithm if the vehicle is in a preset garage driving scenario, where the vehicle enters the preset garage driving scenario when a distance of the vehicle in the driving direction from a garage entrance is less than a second threshold.

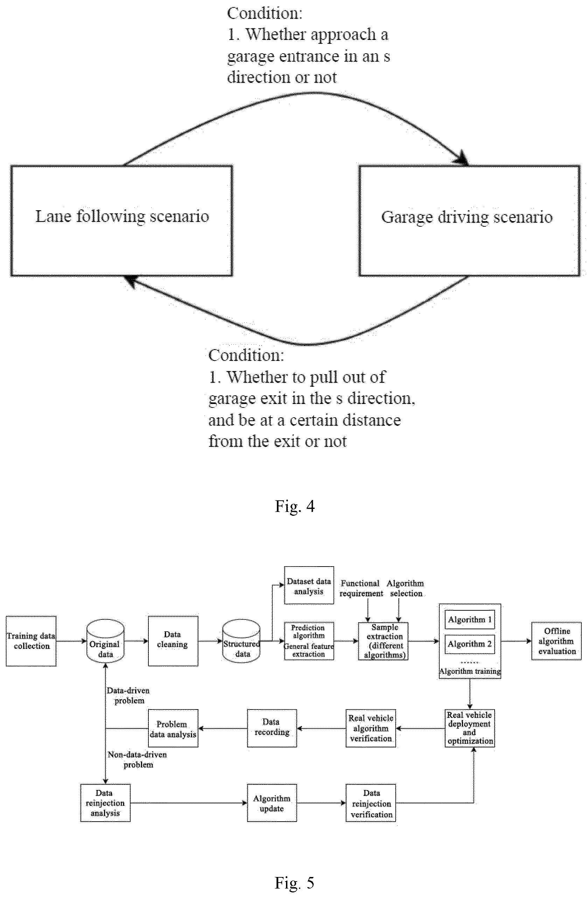

As shown in Fig. 4, a prediction algorithm for integrated driving and parking of the embodiment of the invention is implemented by a task scheduling module. When a vehicle is in a lane following scenario, a driving prediction algorithm is called by the task scheduling module, and when the vehicle is in a garage driving scenario, a garage driving scenario prediction algorithm is called by the task scheduling module. The vehicle enters the garage driving scenario when the distance of the vehicle from the garage entrance in the driving direction is less than the first threshold, and the vehicle enters the lane following scenario when the distance of the vehicle from the garage exit in the driving direction is less than the second threshold. The first threshold and the second threshold may be determined according to actual situations, and are not specifically limited.

In one embodiment of the invention, the prediction module 200 further includes: a data triggering sub-module. The data triggering sub-module is configured to trigger and record preset scenario data and problem data, and uploading triggered data to a server to implement data loop closing.

In the embodiment of the invention, a data triggering signal can be outputted by a data triggering module. As shown in Fig. 5, the data loop closing of the embodiment of the invention mainly includes the steps of: training data collection; data cleaning to generate structured data; general feature extraction; sample extraction; algorithm training; real vehicle deployment and optimization; real vehicle algorithm verification; data recording; and problem data analysis.

After the data analysis is finished, if the problem is a data-driven problem, data is merged into original data; if it is not the data-driven problem, proceed to the following steps: data reinjection analysis; algorithm update; data reinjection verification; the real vehicle deployment and optimization.

In one embodiment of the invention, the decision module 300 includes: a processing sub-module and a decision sub-module.

The processing sub-module is configured to determine, based on an actual type of the map, a candidate lane set, screen a candidate lane that meets a preset condition in the candidate lane set, determine a candidate coordinate system and a boundary according to the candidate lane and a preset reference line, make a preset traffic rule decision according to the candidate coordinate system and the boundary to obtain a traffic rule decision result, and mark an obstacle around the vehicle to obtain a horizontal and vertical marked result of the obstacle; and the decision sub-module is configured to call, according to a decision scenario, a decision algorithm that meets the current scenario, make a decision on the traffic rule decision result and the horizontal and vertical marked result of the obstacle by using the decision algorithm, determine a path boundary constraint and a velocity boundary constraint in the candidate coordinate system, and perform trajectory planning and trajectory feature extraction according to the path boundary constraint and the velocity boundary constraint to obtain a reference trajectory, a reference trajectory boundary, reference velocity and a reference velocity boundary for driving or parking of the vehicle.

The environmental model for decision of the embodiment of the invention includes: a model mainly based on a high-definition map and supplemented by perceived information and a model of combining a crowd-sourcing map with the perceived information.

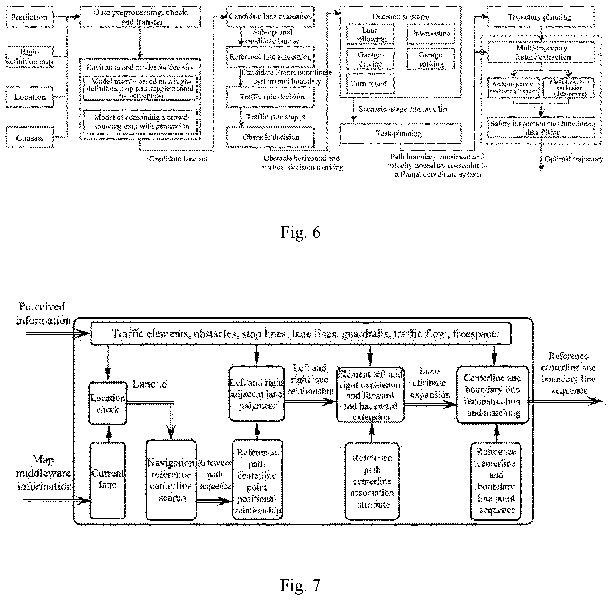

Specifically, the decision module 300 of the embodiment of the invention can be divided in detail into: a data preprocessing sub-module, an environmental model sub-module, a candidate lane sub-module, a reference line smoothing sub-module, a traffic rule decision sub-module, an obstacle decision sub-module, a decision scenario sub-module, a task planning sub-module and a post-decision sub-module. As shown in Fig. 6, in the embodiment of the invention, body information, a map, location information and a predicted trajectory are inputted, and undergo operations such as screening, processing, evaluation and extraction by multiple sub-modules in the decision module 200, and thereby, an optimal trajectory of driving or parking the vehicle can be outputted and obtained, where the optimal trajectory includes: a reference trajectory and left and right boundaries thereof, and reference velocity and velocity upper and lower boundaries. path planning for the driving or parking of the vehicle is implemented by narrowing a reference range.

In one embodiment of the invention, the processing sub-module is specifically configured to process preprocessed data, if the map is a preset high-definition map, by using a strategy of the preset high-definition map and perceived information correction; and process preprocessed data, if the map is a preset crowd-sourcing map, by using a strategy of combining the preset crowd-sourcing map with the perceived information, where the preset crowd-sourcing map is a road prior information profile generated by combining traffic elements perceived in real time for multiple times.

It can be understood that the environmental model sub-module of the embodiment of the invention is configured to process outputs of candidate lanes when map sources are different. When the map source is the high-definition map, the data is processed with the strategy mainly based on the high-definition map and supplemented by the perceived information correction, and when the map source is the crowd-sourcing map, the data is processed by employing the strategy of combining the crowd-sourcing map with the perceived information. A connection between an open road and a garage road is realized through perception of crowd-sourcing mapping, thereby realizing continuity experience in integrated driving and parking.

In the actual execution process, the crowd-sourcing map is the road prior information profile that can be generated through an automated drawing tool by combining the traffic elements perceived in real time for multiple times in the embodiment of the invention.

In one embodiment of the invention, the strategy of combining the preset crowd-sourcing map with the perceived information includes: judging lane information of a current lane of a vehicle according to preprocessed data; performing location check according to the lane information and perceived information, determining a lane identifier of the current lane of the vehicle, and searching a navigation reference centerline by using the lane identifier to obtain a reference path sequence, and determining, based on the reference path sequence, a reference path centerline point positional relationship; performing mutual check and fusion according to the perceived information and the reference path centerline point positional relationship to obtain a left and right lane line relationship of the current lane, and performing mutual check and fusion according to the perceived information and the left and right lane line relationship to obtain lane attribute expansion information; and performing mutual check and fusion according to the perceived information, the lane attribute expansion information, a reference line centerline and boundary line point sequence, outputting a reference centerline and boundary sequence, and determining, based on the reference centerline and boundary sequence, a candidate lane set.

Specifically, as shown in Fig. 7, the strategy of combining the crowd-sourcing map with the perceived information of the embodiment of the invention includes: current lane judgment, location check, navigation reference centerline search, reference path centerline point positional relationship confirmation, left and right adjacent lane judgment, element left and right expansion and forward and backward extension, centerline and boundary line reconstruction and matching, and final output of a reference centerline and a reference boundary sequence. In the embodiment of the invention, the candidate lane set can be determined by the reference centerline and boundary sequence. In the embodiment of the invention, differences between a map and a real environment can be rapidly updated according to mapping with the perceived information when an actual road is updated, and it is guaranteed by multiple check fusion that the continuity is maintained when the crowd-sourcing map fails in a short time or an element is abnormal.

Inputs of a location check module include current lane information and perceived information A, where the perceived information A includes traffic elements, obstacles, stop lines, lane lines, guardrails, traffic flow, and freespace;
inputs of a left and right adjacent lane judgment module include the perceived information A and the reference path centerline point positional relationship, and an output is the left and right lane line relationship, and mutual check and fusion are performed therebetween;
inputs of the element left and right expansion and the forward and backward extension includes the perceived information A, a reference path centerline association relationship and the left and a right lane relationship, and mutual check and fusion are performed among the three; an output is lane attribute expansion; and
inputs of a centerline and boundary line reconstruction and matching module include the lane attribute expansion, the perceived information A and the reference line centerline and boundary line point sequence, and mutual check and fusion are performed among the three; an output is the reference centerline and boundary sequence.

In one embodiment of the invention, the planning module 400 includes: a trajectory planning sub-module, configured to plan an optimal path according to a reference trajectory, a reference trajectory boundary, a predicted trajectory and location information of a vehicle; and a velocity planning sub-module, configured to plan optimal velocity according to the optimal path, reference velocity and a reference velocity boundary.

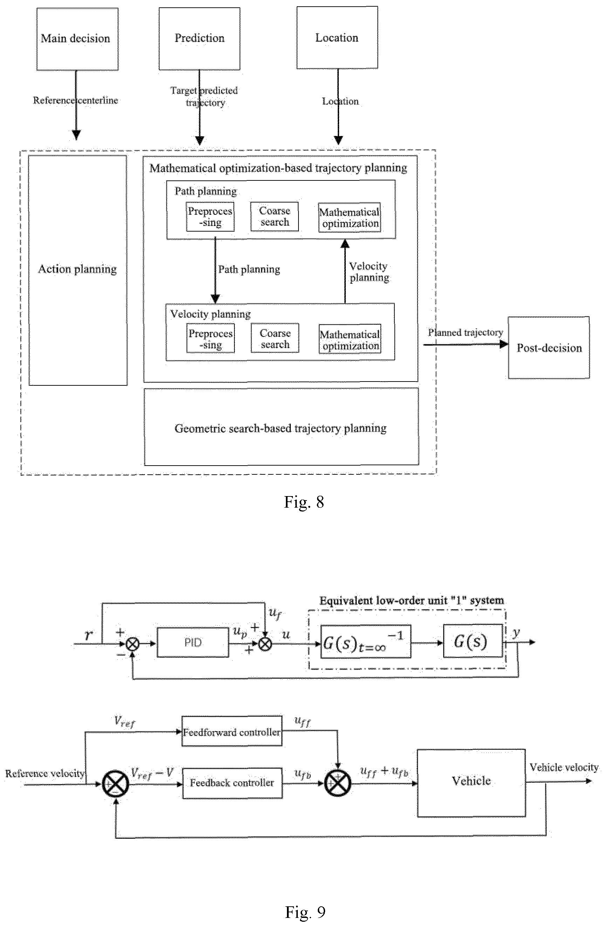

As shown in Fig. 8, the planning module 400 of the embodiment of the invention can obtain an optimal trajectory and optimal velocity for driving and parking of a vehicle by inputting a decision reference centerline (including a reference trajectory and left and right boundaries thereof, and reference velocity and upper and lower boundaries thereof), a target predicted trajectory and location information, and through preprocessing, coarse search and digitally optimized processing by the trajectory planning sub-module and the velocity planning sub-module. Meanwhile, in the embodiment of the invention, a planned path is transmitted to the velocity planning sub-module, and a planned velocity result is transmitted to the trajectory planning sub-module, thereby implementing interworking and resource sharing between the sub-modules, such that an optimal control trajectory required by the vehicle is outputted, including a centerline and velocity.

In one embodiment of the invention, the control module 500 employs a control architecture of combining feedforward and PID feedback, and the control architecture employs a dynamic change parameter-based dual-loop PID control algorithm.

It can be understood that static and dynamic architectures and an algorithm library with a standardized interface can be shared for driving and parking, and an optimal algorithm is called through scenario refinement. As shown in Fig. 9, an improved feedforward plus PID feedback control architecture is employed, and a dynamic change parameter-based dual-loop PID control algorithm is employed.

According to the software architecture platform for the autonomous vehicle proposed in the embodiment of the invention, a prediction algorithm suitable for a current scenario is called according to a system running state and a decision scenario of the vehicle, and a predicted trajectory of a target around the vehicle is generated by combining environmental information of the vehicle with target or obstacle timing information, and an optimal trajectory and optimal velocity for driving or parking of the vehicle are planned by using information such as body information and map location of the vehicle, thereby implementing autonomous driving and/or autonomous parking of the vehicle. Through a driving and parking integrated planning control architecture employed, the same software architecture is used in driving and parking. A corresponding algorithm is called based on each scenario, such that architecture sharing and module sharing can be implemented, the consumption of computing resources can be reduced, the number and cost of controllers can be reduced, and the labor cost can be reduced. Moreover, by configuration files, platform-based algorithms can be applied to controllers and vehicle models with different computing power, a platform-based development mode can be implemented, and the development efficiency can be improved. Thus, the problems that continuity in daily travel scenario experience cannot be realized, a driving software architecture and a parking software architecture cannot be shared, and software scheduling efficiency is low and the like in the related art are solved.

Next, a control method for an autonomous vehicle proposed according to invention is described with reference to the drawings, is applied to a vehicle, and is used for controlling the vehicle to implement a preset driving function and a preset parking function.

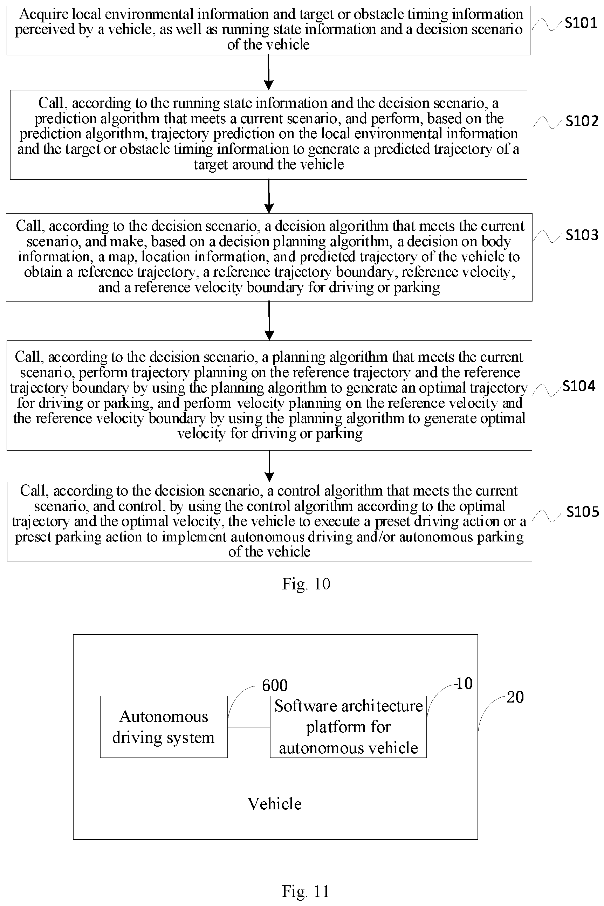

Fig. 10 is a flowchart of a control method for an autonomous vehicle provided by an embodiment of the invention.

As shown in Fig. 10, the control method for the autonomous vehicle includes the steps:
in step S101, local environmental information perceived by a vehicle, target or obstacle timing information, as well as running state information and a decision scenario are acquired;
in step S102, a prediction algorithm that meets a current scenario is called according to the running state information and the decision scenario, and trajectory prediction is performed, based on the prediction algorithm, on the local environmental information and the target or obstacle timing information to generate a predicted trajectory of a target around the vehicle;
in step S103, a decision algorithm that meets the current scenario is called according to the decision scenario, and a decision is made, based on the decision planning algorithm, on body information, a map, location information and the predicted trajectory of the vehicle to obtain a reference trajectory, a reference trajectory boundary, reference velocity and a reference velocity boundary for driving or parking;
in step S104, a planning algorithm that meets the current scenario is called according to the decision scenario, trajectory planning is performed on the reference trajectory and the reference trajectory boundary by using the planning algorithm to generate an optimal trajectory for the driving or parking, and velocity planning is performed on the reference velocity and the reference velocity boundary by using the planning algorithm to generate optimal velocity for the driving or parking; and
in step S105, a control algorithm that meets the current scenario is called according to the decision scenario, and the vehicle is controlled by using the control algorithm according to the optimal trajectory and the optimal velocity to execute a preset driving action or a preset parking action to implement autonomous driving and/or autonomous parking of the vehicle.

It should be noted that the foregoing explanation of the embodiment of the platform for the autonomous vehicle is also applicable to the control method for the autonomous vehicle of this embodiment, which will not be repeated here.

According to the control method for the autonomous vehicle proposed in the embodiment of the invention, a prediction algorithm suitable for a current scenario is called according to a system running state and a decision scenario of the vehicle, and a predicted trajectory of a target around the vehicle is generated by combining environmental information of the vehicle with target or obstacle timing information, and an optimal trajectory and optimal velocity for driving or parking of the vehicle are planned by using information such as body information and map location of the vehicle, thereby implementing autonomous driving or autonomous parking of the vehicle. Through a driving and parking integrated planning control architecture employed, the same software architecture is used in driving and parking. A corresponding algorithm is called based on each scenario, such that architecture sharing and module sharing can be implemented, the consumption of computing resources can be reduced, the number and cost of controllers can be reduced, and the labor cost can be reduced. Moreover, by configuration files, platform-based algorithms can be applied to controllers and vehicle models with different computing power, a platform-based development mode can be implemented, and the development efficiency can be improved. Thus, the problems that continuity in daily travel scenario experience cannot be realized, a driving software architecture and a parking software architecture cannot be shared, and software scheduling efficiency is low and the like in the related art are solved.

Fig. 11 is a block schematic diagram of a vehicle provided by an embodiment of the invention.

As shown in Fig. 11, the vehicle 20 includes: an autonomous driving system 600 and a software architecture platform for an autonomous vehicle 10.

A preset driving function and a preset parking function of the autonomous driving system share the platform, and the platform is configured to acquire environmental information around the vehicle, target information, running state information and a decision scenario; call, according to the running state information and the decision scenario, a prediction algorithm that meets a current scenario, and perform, based on the prediction algorithm, trajectory prediction on the local environmental information and the target or obstacle timing information to generate a predicted trajectory of a target around the vehicle; call, according to the decision scenario, a decision algorithm that meets the current scenario, and make, based on the decision planning algorithm, a decision on body information, a map, location information and the predicted trajectory of the vehicle to obtain a reference trajectory, a reference trajectory boundary, reference velocity and a reference velocity boundary for driving or parking; call, according to the decision scenario, a planning algorithm that meets the current scenario, perform trajectory planning on the reference trajectory and the reference trajectory boundary by using the planning algorithm to generate an optimal trajectory for the driving or parking, and perform velocity planning on the reference velocity and the reference velocity boundary by using the planning algorithm to generate optimal velocity for the driving or parking; call, according to the decision scenario, a control algorithm that meets the current scenario, and control, by using the control algorithm according to the optimal trajectory and the optimal velocity, the vehicle to execute a preset driving action or a preset parking action to implement autonomous driving and/or autonomous parking of the vehicle.

Invention further provides a computer-readable storage medium having a computer program stored thereon, where the program, when executed by a processor, implements the control method for the autonomous vehicle as described above.

In the descriptions of this specification, descriptions of reference terms such as "one embodiment" , "some embodiments" , "an example" , "a specific example" or "some examples" means that specific features, structures, materials, or characteristics described with reference to the embodiment or the example are included in at least one embodiment or example of the invention. In this specification, the schematic expressions of the above terms do not necessarily refer to the same embodiment or example. Moreover, the described specific features, structures, materials, or characteristics can be combined in a proper manner in any one embodiment or example or N embodiments or examples. Furthermore, without contradictory, those skilled in the art can integrate and combine different embodiments or examples described in this specification and the features of different embodiments or examples.

Furthermore, the terms "first" and "second" are only used for descriptive purposes and cannot be understood as indicating or implying relative importance or implying the number of technical features indicated. Thus, the features defined as "first" and "second" may include at least one of these features explicitly or implicitly. In the description of the invention, "N" means at least two, for example, two, three, etc., unless otherwise specified.

Any process or method in the flowchart or otherwise described herein can be understood as representing a module, fragment, or part of a code that includes one or N executable instructions used for implementing custom logical functions or steps of a process; the functions may be performed not in order indicated or discussed, including a substantially simultaneous manner or in reverse order according to the functions involved.

It should be understood that various parts of the invention can be implemented in hardware, software, firmware, or a combination thereof. In the above-mentioned implementations, N steps or methods can be implemented in software or firmware stored in a memory and executed by a suitable instruction execution system. For example, if implemented in hardware, as in another embodiment, the N steps or methods can be implemented with any of the following techniques well known in the art or a combination thereof: a discrete logic circuit with a logic gate for implementing logic functions on a data signal, a specialized integrated circuit with a suitable combination logic gate, a programmable gate array, a field programmable gate array and the like.

Those of ordinary skill in the art should understand that all or part of the steps of the method in the above-mentioned embodiment can be implemented by a program instructing related hardware. The program can be stored in a computer-readable storage medium. The program, when executed, includes one or a combination of the steps of the method embodiments.

Although embodiments of the invention have been shown and described above, it can be understood that the above embodiments are exemplary and cannot be understood as limiting the invention. Those of ordinary skill in the art can make changes, modifications, substitutions, and variations to the above embodiments.

The above embodiments are described only for better understanding, rather than restricting the present disclosure. Any person skilled in the art can make amendments to the implementing forms or details. The scope of protection of the invention is determined by the claims.

## Claims

1. A software architecture platform for an autonomous vehicle (10), wherein the vehicle is provided with a preset driving function and a preset parking function, and the platform is configured to control the vehicle to implement the preset driving function and the preset parking function, and the platform comprises:
an acquisition module (100), configured to acquire local environmental information and target or obstacle timing information perceived by the vehicle, as well as running state information and a decision scenario of the vehicle;
a prediction module (200), configured to call, according to the running state information and the decision scenario, a prediction algorithm that meets a current scenario, and perform, based on the prediction algorithm, trajectory prediction on the local environmental information and the target or obstacle timing information to generate a predicted trajectory of a target around the vehicle;
a decision module (300), configured to call, according to the decision scenario, a decision algorithm that meets the current scenario, and make, based on the decision algorithm, a decision on body information, a map, location information and the predicted trajectory of the vehicle to obtain a reference trajectory, a reference trajectory boundary, reference velocity and a reference velocity boundary for driving or parking;
a planning module (400), configured to call, according to the decision scenario, a planning algorithm that meets the current scenario, perform trajectory planning on the reference trajectory and the reference trajectory boundary by using the planning algorithm to generate an optimal trajectory for the driving or parking, and perform velocity planning on the reference velocity and the reference velocity boundary by using the planning algorithm to generate optimal velocity for the driving or parking; and
a control module (500), configured to call, according to the decision scenario, a control algorithm that meets the current scenario, and control, by using the control algorithm according to the optimal trajectory and the optimal velocity, the vehicle to execute a preset driving action or a preset parking action to implement autonomous driving and/or autonomous parking of the vehicle.

2. The platform (10) according to claim 1, wherein a scenario recognition module is provided for judging a current decision scenario according to a vehicle driving environment, the decision scenario comprising one or more of a lane following scenario, an intersection scenario, a garage driving scenario, a garage parking scenario and a turn-round scenario, the scenarios belonging to a driving decision-type scenario and a parking decision-type scenario, the driving decision-type scenario comprising the lane following scenario, the intersection scenario, the garage driving scenario and the turn-round scenario, and the parking decision-type scenario comprising the garage parking scenario, wherein
if the vehicle meets a preset turn-round scenario condition, the vehicle enters the turn-round scenario, and then, a prediction algorithm, a decision algorithm, a planning algorithm and a control algorithm required by the turn-round scenario are called;
if the vehicle meets a preset intersection scenario condition, the vehicle enters the intersection scenario, and then, a prediction algorithm, a decision algorithm, a planning algorithm and a control algorithm required by the intersection scenario are called;
if the vehicle meets a preset garage driving scenario condition, the vehicle enters the garage scenario, and then, a prediction algorithm, a decision algorithm, a planning algorithm and a control algorithm required by the garage driving scenario are called; and
if the vehicle meets a preset parking scenario condition, the vehicle enters the garage parking scenario, and then, a prediction algorithm, a decision algorithm, a planning algorithm and a control algorithm required by the turn-round parking scenario are called.

3. The platform (10) according to claim 1, wherein the decision module (300) comprises:
a processing sub-module, configured to determine, based on an actual type of the map, a candidate lane set, screen a candidate lane that meet a preset condition in the candidate lane set, determine a candidate coordinate system and a boundary according to the candidate lane and a preset reference line, make a preset traffic rule decision according to the candidate coordinate system and the boundary to obtain a traffic rule decision result, and mark an obstacle around the vehicle to obtain a horizontal and vertical marked result of the obstacle; and
a decision sub-module, configured to call, according to the decision scenario, a decision algorithm that meets the current scenario, make a decision on the traffic rule decision result and the horizontal and vertical marked result of the obstacle by using the decision algorithm, determine a path boundary constraint and a velocity boundary constraint in the candidate coordinate system, and perform trajectory planning and trajectory feature extraction according to the path boundary constraint and the velocity boundary constraint to obtain a reference trajectory, a reference trajectory boundary, reference velocity and a reference velocity boundary for driving or parking of the vehicle.

4. The platform (10) according to claim 3, wherein the processing sub-module is specifically configured to:
process preprocessed data, if the map is a preset high-definition map, by using a strategy of the preset high-definition map and perceived information correction; and
process preprocessed data, if the map is a preset crowd-sourcing map, by using a strategy of combining the preset crowd-sourcing map with the perceived information, wherein the preset crowd-sourcing map is a road prior information profile generated by combining traffic elements perceived in real time for multiple times.

5. The platform (10) according to claim 4, wherein the strategy of combining the preset crowd-sourcing map with the perceived information comprises:
judging lane information of a current lane of the vehicle according to the preprocessed data;
performing location check according to the lane information and the perceived information, determining a lane identifier of the current lane of the vehicle, searching a navigation reference centerline by using the lane identifier to obtain a reference path sequence, and determining, based on the reference path sequence, a reference path centerline point positional relationship;
performing mutual check and fusion according to the perceived information and the reference path centerline point positional relationship to obtain a left and right lane line relationship of the current lane, and performing mutual check and fusion according to the perceived information and the left and right lane line relationship to obtain lane attribute expansion information; and
performing mutual check and fusion according to the perceived information, the lane attribute expansion information, a reference line centerline and boundary line point sequence, outputting a reference centerline and boundary sequence, and determining, based on the reference centerline and boundary sequence, a candidate lane set.

6. The platform (10) according to claim 1, wherein the prediction module (200) comprises:
a data preprocessing sub-module, configured to preprocess the environmental information and the target or obstacle timing information to obtain target information and preprocessed environmental information;
a task scheduling sub-module, configured to call, according to the running state information and the decision scenario, a prediction algorithm that meets a current scenario; and
a prediction algorithm sub-module, configured to perform, based on the prediction algorithm, destination prediction, intention prediction and deep learning-based trajectory prediction on the target information and the preprocessed environmental information to obtain a predicted destination, a target intention and a model generation trajectory, and to obtain, based on the predicted destination and the target intention, a rule generation trajectory, and perform trajectory processing on the model generation trajectory and the rule generation trajectory to obtain a predicted trajectory of a target around the vehicle.

7. The platform (10) according to claim 6, wherein the task scheduling sub-module is specifically configured to:
call a preset driving prediction algorithm if the vehicle is in a preset lane following scenario, wherein the vehicle enters the preset lane following scenario when a distance of the vehicle from a garage exit in a driving direction is less than a first threshold; and
call a preset garage driving scenario prediction algorithm if the vehicle is in a preset garage driving scenario, wherein the vehicle enters the preset garage driving scenario when a distance of the vehicle from a garage entrance in the driving direction is less than a second threshold.

8. The platform (10) according to claim 6, wherein the prediction module (200) further comprises:
a data triggering sub-module, configured to trigger and record preset scenario data and problem data, and upload triggered data to a server to implement data loop closing.

9. The platform (10) according to claim 1, wherein the planning module (400) comprises:
a trajectory planning sub-module, configured to plan an optimal path according to the reference trajectory, the reference trajectory boundary, the predicted trajectory and the location information of the vehicle;
a velocity planning sub-module, configured to plan optimal velocity according to the optimal path, the reference velocity and the reference velocity boundary.

10. The platform (10) according to claim 1, wherein the control module (500) employs a control architecture of combining feedforward and PID feedback, and the control architecture employs a dynamic change parameter-based dual-loop PID control algorithm.

11. A control method for an autonomous vehicle, wherein the method is applied to a vehicle, and used for controlling the vehicle to implement a preset driving function and a preset parking function, and the method comprises the steps of:
acquiring local environmental information and target or obstacle timing information perceived by the vehicle, as well as running state information and a decision scenario of the vehicle (S101);
calling, according to the running state information and the decision scenario, a prediction algorithm that meets a current scenario, and performing, based on the prediction algorithm, trajectory prediction on the local environmental information and the target or obstacle timing information to generate a predicted trajectory of a target around the vehicle (S102);
calling, according to the decision scenario, a decision algorithm that meets the current scenario, and making, based on the decision planning algorithm, a decision on body information, a map, location information and the predicted trajectory of the vehicle to obtain a reference trajectory, a reference trajectory boundary, reference velocity and a reference velocity boundary for driving or parking (S103);
calling, according to the decision scenario, a planning algorithm that meets the current scenario, performing trajectory planning on the reference trajectory and the reference trajectory boundary by using the planning algorithm to generate an optimal trajectory for the driving or parking, and performing velocity planning on the reference velocity and the reference velocity boundary by using the planning algorithm to generate optimal velocity for the driving or parking (S104); and
calling, according to the decision scenario, a control algorithm that meets the current scenario, and controlling, by using the control algorithm according to the optimal trajectory and the optimal velocity, the vehicle to execute a preset driving action or a preset parking action to implement autonomous driving and/or autonomous parking of the vehicle (S105).

12. A vehicle (20), **characterized by** comprising:
an autonomous driving system (600); and
a software architecture platform for an autonomous vehicle (10) according to claim 1, wherein a preset driving function and a preset parking function of the autonomous driving system share the platform.

13. A computer-readable storage medium having a computer program stored thereon, wherein the program is executed by a processor for implementing the control method for the autonomous vehicle according to claim 11.

## Patentansprüche

1. Eine Softwarearchitekturplattform für ein autonomes Fahrzeug (10), wobei das Fahrzeug mit einer voreingestellten Fahrfunktion und einer voreingestellten Parkfunktion versehen ist und die Plattform so konfiguriert ist, dass sie das Fahrzeug steuert, um die voreingestellte Fahrfunktion und die voreingestellte Parkfunktion auszuführen, und wobei die Plattform umfasst:
ein Erfassungsmodul (100), das so konfiguriert ist, dass es lokale Umgebungsinformationen und vom Fahrzeug wahrgenommene Ziel- oder Hindernis-Zeitinformationen sowie Fahrzustandsinformationen und ein Entscheidungsszenario des Fahrzeugs erfasst;
ein Prognosemodul (200), das so konfiguriert ist, dass es entsprechend den Fahrzustandsinformationen und dem Entscheidungsszenario einen Prognosealgorithmus aufruft, der einem aktuellen Szenario entspricht, und auf der Grundlage des Prognosealgorithmus eine Trajektorieprognose für die lokalen Umgebungsinformationen und die Ziel- oder Hindernis-Zeitinformationen durchführt, um eine vorhergesagte Trajektorie eines Ziels um das Fahrzeug herum zu erzeugen;
ein Entscheidungsmodul (300), das so konfiguriert ist, dass es entsprechend dem Entscheidungsszenario einen Entscheidungsalgorithmus aufruft, der dem aktuellen Szenario entspricht, und auf der Grundlage des Entscheidungsalgorithmus eine Entscheidung über Karosserieinformationen, eine Karte, Standortinformationen und die vorhergesagte Trajektorie des Fahrzeugs trifft, um eine Referenztrajektorie, eine Referenztrajektoriegrenze, eine Referenzgeschwindigkeit und eine Referenzgeschwindigkeitsgrenze für das Fahren oder Parken zu erhalten;
ein Planungsmodul (400), das so konfiguriert ist, dass es entsprechend dem Entscheidungsszenario einen Planungsalgorithmus aufruft, der dem aktuellen Szenario entspricht, eine Trajektorieplanung für die Referenztrajektorie und die Referenztrajektoriegrenze unter Verwendung des Planungsalgorithmus durchführt, um eine optimale Trajektorie für das Fahren oder Parken zu erzeugen, und eine Geschwindigkeitsplanung für die Referenzgeschwindigkeit und die Referenzgeschwindigkeitsgrenze unter Verwendung des Planungsalgorithmus durchführt, um eine optimale Geschwindigkeit für das Fahren oder Parken zu erzeugen; und
ein Steuermodul (500), das so konfiguriert ist, dass es entsprechend dem Entscheidungsszenario einen Steuerungsalgorithmus aufruft, der dem aktuellen Szenario entspricht, und unter Verwendung des Steuerungsalgorithmus entsprechend der optimalen Trajektorie und der optimalen Geschwindigkeit das Fahrzeug so steuert, dass es eine voreingestellte Fahraktion oder eine voreingestellte Parkaktion ausführt, um das autonome Fahren und/oder das autonome Parken des Fahrzeugs zu realisieren.

2. Die Plattform (10) nach Anspruch 1, wobei ein Szenarioerkennungsmodul vorgesehen ist, um ein aktuelles Entscheidungsszenario entsprechend einer Fahrzeugfahrumgebung zu beurteilen, wobei das Entscheidungsszenario eines oder mehrere der folgenden Szenarien umfasst: ein Fahrspurverfolgungsszenario, ein Kreuzungsszenario, ein Garagenfahrszenario, ein Garagenparkszenario und ein Wendeszenario, wobei die Szenarien zu einem Fahrentscheidungsszenario und einem Parkentscheidungsszenario gehören, wobei das Fahrentscheidungsszenario das Fahrspurverfolgungsszenario umfasst, das Kreuzungsszenario, das Garagenfahrszenario und das Wendeszenario umfasst, und das Parkentscheidungs-Szenario das Garagenparkszenario umfasst, wobei
wenn das Fahrzeug eine voreingestellte Wendeszenario-Bedingung erfüllt, das Fahrzeug in das Wendeszenario eintritt und dann ein Prognosealgorithmus, ein Entscheidungsalgorithmus, ein Planungsalgorithmus und ein Steuerungsalgorithmus, die für das Wendeszenario erforderlich sind, aufgerufen werden;
wenn das Fahrzeug eine voreingestellte Kreuzungsszenario-Bedingung erfüllt, das Fahrzeug in das Kreuzungsszenario eintritt und dann ein Prognosealgorithmus, ein Entscheidungsalgorithmus, ein Planungsalgorithmus und ein Steuerungsalgorithmus aufgerufen werden, die für das Kreuzungsszenario erforderlich sind;
wenn das Fahrzeug eine voreingestellte Bedingung für das Garagenfahrszenario erfüllt, das Fahrzeug in das Garagenszenario eintritt und dann ein Prognosealgorithmus, ein Entscheidungsalgorithmus, ein Planungsalgorithmus und ein Steuerungsalgorithmus aufgerufen werden, die für das Garagenfahrszenario erforderlich sind; und
wenn das Fahrzeug eine voreingestellte Bedingung für das Parkszenario erfüllt, das Fahrzeug in das Garagenparkszenario eintritt und dann ein Prognosealgorithmus, ein Entscheidungsalgorithmus, ein Planungsalgorithmus und ein Steuerungsalgorithmus aufgerufen werden, die für das Wende-Parkszenario erforderlich sind.

3. Die Plattform (10) nach Anspruch 1, wobei das Entscheidungsmodul (300) umfasst:
ein Verarbeitungssubmodul, das so konfiguriert ist, dass es auf der Grundlage eines tatsächlichen Kartentyps einen Satz von Fahrspurkandidaten bestimmt, einen Fahrspurkandidaten prüft, der eine voreingestellte Bedingung in dem Satz von Fahrspurkandidaten erfüllt, ein Kandidatenkoordinatensystem und eine Grenze entsprechend dem Fahrspurkandidaten und einer voreingestellten Referenzlinie bestimmt, eine voreingestellte Verkehrsregelentscheidung entsprechend dem Kandidatenkoordinatensystem und der Grenze trifft, um ein Verkehrsregelentscheidungsergebnis zu erhalten, und Markieren eines Hindernisses um das Fahrzeug herum, um ein horizontales und vertikales Markierungsergebnis des Hindernisses zu erhalten; und
ein Entscheidungssubmodul, das so konfiguriert ist, dass es gemäß dem Entscheidungsszenario einen Entscheidungsalgorithmus, der dem aktuellen Szenario entspricht, eine Entscheidung über das Verkehrsregelentscheidungsergebnis und das horizontale und vertikale Markierungsergebnis des Hindernisses unter Verwendung des Entscheidungsalgorithmus zu treffen, eine Pfadgrenzbeschränkung und eine Geschwindigkeitsgrenzbeschränkung im Kandidatenkoordinatensystem zu bestimmen und eine Trajektorienplanung und Trajektorienmerkmals-Extraktion gemäß der Pfadgrenzbeschränkung und der Geschwindigkeitsgrenzbeschränkung durchzuführen, um eine Referenztrajektorie, eine Referenztrajektoriengrenze, eine Referenzgeschwindigkeit und eine Referenzgeschwindigkeitsgrenze für das Fahren oder Parken des Fahrzeugs zu erhalten.

4. Die Plattform (10) nach Anspruch 3, wobei das Verarbeitungssubmodul speziell konfiguriert ist, um:
vorverarbeitete Daten zu verarbeiten, wenn die Karte eine voreingestellte hochauflösende Karte ist, unter Verwendung einer Strategie der voreingestellten hochauflösenden Karte und der Korrektur wahrgenommener Informationen; und
vorverarbeitete Daten zu verarbeiten, wenn die Karte eine voreingestellte Crowdsourcing-Karte ist, indem eine Strategie zum Kombinieren der voreingestellten Crowdsourcing-Karte mit den wahrgenommenen Informationen verwendet wird, wobei die voreingestellte Crowdsourcing-Karte ein Straßenvorabinformationsprofil ist, das durch Kombinieren von in Echtzeit zu mehreren Zeiten wahrgenommenen Verkehrselementen erzeugt wird.

5. Die Plattform (10) nach Anspruch 4, wobei die Strategie zum Kombinieren der voreingestellten Crowdsourcing-Karte mit den wahrgenommenen Informationen umfasst:
Beurteilen von Fahrspurinformationen einer aktuellen Fahrspur des Fahrzeugs anhand der vorverarbeiteten Daten;
Durchführen einer Positionsprüfung gemäß den Fahrspurinformationen und den wahrgenommenen Informationen, Bestimmen einer Fahrspurkennung der aktuellen Fahrspur des Fahrzeugs, Suchen einer Navigationsreferenzmittellinie unter Verwendung der Fahrspurkennung, um eine Referenzpfadsequenz zu erhalten, und Bestimmen einer Referenzpfadmittellinienpunkt-Positionsbeziehung auf der Grundlage der Referenzpfadsequenz;
Durchführen einer gegenseitigen Überprüfung und Fusion gemäß den wahrgenommenen Informationen und der Referenzpfadmittellinienpunkt-Positionsbeziehung, um eine linke und rechte Fahrspurlinienbeziehung der aktuellen Fahrspur zu erhalten, und Durchführen einer gegenseitigen Überprüfung und Fusion gemäß den wahrgenommenen Informationen und der linken und rechten Fahrspurlinienbeziehung, um Fahrspurattribut-Erweiterungsinformationen zu erhalten; und
Durchführen einer gegenseitigen Überprüfung und Fusion gemäß den wahrgenommenen Informationen, den Fahrspurattribut-Erweiterungsinformationen, einer Referenzlinienmittellinie und einer Begrenzungslinienpunktsequenz, Ausgeben einer Referenzmittellinie und einer Begrenzungssequenz und Bestimmen eines Fahrspurkandidatensatzes auf der Grundlage der Referenzmittellinie und der Begrenzungssequenz.

6. Die Plattform (10) nach Anspruch 1, wobei das Prognosemodul (200) umfasst:
ein Datenvorverarbeitungssubmodul, das so konfiguriert ist, dass es die Umgebungsinformationen und die Ziel- oder Hindernis-Zeitinformationen vorverarbeitet, um Zielinformationen und vorverarbeitete Umgebungsinformationen zu erhalten;
ein Aufgabenplanungssubmodul, das so konfiguriert ist, dass es entsprechend den Fahrzustandsinformationen und dem Entscheidungsszenario einen Prognosealgorithmus aufruft, der einem aktuellen Szenario entspricht; und
ein Prognosealgorithmussubmodul, das so konfiguriert ist, dass es auf der Grundlage des Prognosealgorithmus eine Zielprognose, eine Absichtsprognose und eine auf Deep Learning basierende Trajektorieprognose für die Zielinformationen und die vorverarbeiteten Umgebungsinformationen durchführt, um ein vorhergesagtes Ziel, eine Zielabsicht und eine Modellgenerierungstrajektorie zu erhalten, und auf der Grundlage des vorhergesagten Ziels und der Zielabsicht eine Regelgenerierungstrajektorie zu erhalten, und eine Trajektorienverarbeitung für die Modellgenerierungstrajektorie und die Regelgenerierungstrajektorie durchführt, um eine vorhergesagte Trajektorie eines Ziels um das Fahrzeug herum zu erhalten.

7. Die Plattform (10) nach Anspruch 6, wobei das Aufgabenplanungssubmodul speziell konfiguriert ist, um einen voreingestellten Fahrprognosealgorithmus aufzurufen, wenn sich das Fahrzeug in einem voreingestellten Fahrspurverfolgungsszenario befindet, wobei das Fahrzeug in das voreingestellte Fahrspurverfolgungsszenario eintritt, wenn ein Abstand des Fahrzeugs von einer Garagenausfahrt in einer Fahrtrichtung kleiner als ein erster Schwellenwert ist; und
einen voreingestellten Garagen-Fahrszenarioprognosealgorithmus aufzurufen, wenn sich das Fahrzeug in einem voreingestellten Garagenfahrszenario befindet, wobei das Fahrzeug in das voreingestellte Garagenfahrszenario eintritt, wenn ein Abstand des Fahrzeugs von einer Garageneinfahrt in Fahrtrichtung kleiner als ein zweiter Schwellenwert ist.

8. Die Plattform (10) nach Anspruch 6, wobei das Prognosemodul (200) ferner umfasst:
ein Datenauslösungssubmodul, das so konfiguriert ist, dass es voreingestellte Szenariodaten und Problemdaten auslöst und aufzeichnet und ausgelöste Daten auf einen Server hochlädt, um einen Datenschleifenabschluss zu implementieren.

9. Die Plattform (10) nach Anspruch 1, wobei das Planungsmodul (400) umfasst:
ein Trajektorienplanungssubmodul, das so konfiguriert ist, dass es einen optimalen Pfad gemäß der Referenztrajektorie, der Referenztrajektoriengrenze, der vorhergesagten Trajektorie und den Standortinformationen des Fahrzeugs plant;
ein Geschwindigkeitsplanungssubmodul, das so konfiguriert ist, dass es eine optimale Geschwindigkeit gemäß dem optimalen Pfad, der Referenzgeschwindigkeit und der Referenzgeschwindigkeitsgrenze plant.

10. Die Plattform (10) nach Anspruch 1, wobei das Steuermodul (500) eine Steuerungsarchitektur verwendet, die eine Vorwärtsregelung und eine PID-Rückkopplung kombiniert, und die Steuerungsarchitektur einen dynamischen, auf veränderlichen Parametern basierenden Dual-Loop-PID-Steueralgorithmus verwendet.

11. Steuerungsverfahren für ein autonomes Fahrzeug, wobei das Verfahren auf ein Fahrzeug angewendet wird und zur Steuerung des Fahrzeugs dient, um eine voreingestellte Fahrfunktion und eine voreingestellte Parkfunktion auszuführen, und wobei das Verfahren die folgenden Schritte umfasst:
Erfassen von lokalen Umgebungsinformationen und Ziel- oder Hindernis-Zeitinformationen, die vom Fahrzeug wahrgenommen werden, sowie von Fahrzustandsinformationen und einem Entscheidungsszenario des Fahrzeugs (S101);
Aufrufen eines Prognosealgorithmus, der einem aktuellen Szenario entspricht, entsprechend den Fahrzustandsinformationen und dem Entscheidungsszenario, und Durchführen einer Trajektorieprognose auf der Grundlage des Prognosealgorithmus anhand der lokalen Umgebungsinformationen und der Ziel- oder Hindernis-Zeitinformationen,
um eine vorhergesagte Trajektorie eines Ziels um das Fahrzeug herum zu erzeugen (S102);
Aufrufen eines Entscheidungsalgorithmus, der dem aktuellen Szenario entspricht, gemäß dem Entscheidungsszenario und Treffen einer Entscheidung über Karosserieinformationen, eine Karte,
Standortinformationen und die vorhergesagte Trajektorie des Fahrzeugs auf der Grundlage des Entscheidungsplanungsalgorithmus, um eine Referenztrajektorie, eine Referenztrajektoriegrenze, eine Referenzgeschwindigkeit und eine Referenzgeschwindigkeitsgrenze für das Fahren oder Parken zu erhalten (S103);
Aufrufen eines Planungsalgorithmus, der dem aktuellen Szenario entspricht, gemäß dem Entscheidungsszenario, Durchführen einer Trajektorieplanung auf der Referenztrajektorie und der Referenztrajektoriegrenze unter Verwendung des Planungsalgorithmus, um eine optimale Trajektorie für das Fahren oder Parken zu erzeugen, und Durchführen einer Geschwindigkeitsplanung auf der Referenzgeschwindigkeit und der Referenzgeschwindigkeitsgrenze unter Verwendung des Planungsalgorithmus, um eine optimale Geschwindigkeit für das Fahren oder Parken zu erzeugen (S104); und
Aufrufen eines Steuerungsalgorithmus, der dem aktuellen Szenario entspricht, gemäß dem Entscheidungsszenario und Steuern des Fahrzeugs unter Verwendung des Steuerungsalgorithmus gemäß der optimalen Trajektorie und der optimalen Geschwindigkeit, um eine voreingestellte Fahraktion oder Parkaktion auszuführen, um autonomes Fahren und/oder autonomes Parken des Fahrzeugs zu implementieren (S105).

12. Fahrzeug (20), **gekennzeichnet durch**:
ein autonomes Fahrsystem (600); und
eine Softwarearchitekturplattform für ein autonomes Fahrzeug (10) gemäß Anspruch 1, wobei eine voreingestellte Fahrfunktion und eine voreingestellte Parkfunktion des autonomen Fahrsystems die Plattform gemeinsam nutzen.

13. Computerlesbares Speichermedium mit einem darauf gespeicherten Computerprogramm, wobei das Programm von einem Prozessor ausgeführt wird, um das Steuerungsverfahren für das autonome Fahrzeug gemäß Anspruch 11 zu implementieren.

## Revendications

1. Plateforme d'architecture logicielle pour un véhicule autonome (10), dans laquelle le véhicule est pourvu d'une fonction de conduite prédéfinie et d'une fonction de stationnement prédéfinie, la plateforme étant configurée pour commander le véhicule afin de mettre en œuvre la fonction de conduite prédéfinie et la fonction de stationnement prédéfinie, la plateforme comprenant :
un module d'acquisition (100) configuré pour acquérir des informations d'environnement local et des informations temporelles relatives à une cible ou à un obstacle perçues par le véhicule, ainsi que des informations d'état de fonctionnement et un scénario décisionnel du véhicule ;
un module de prédiction (200) configuré pour appeler, en fonction des informations d'état de fonctionnement et du scénario décisionnel, un algorithme de prédiction adapté au scénario en cours et, sur la base de cet algorithme, effectuer une prédiction de trajectoire sur les informations d'environnement local et les informations temporelles relatives à la cible ou à l'obstacle afin de générer une trajectoire prédite d'une cible autour du véhicule ;
un module de décision (300) configuré pour appeler, en fonction du scénario décisionnel, un algorithme de décision adapté au scénario en cours et, sur la base de l'algorithme de décision, prendre une décision concernant les informations de carrosserie, une carte, les informations de position et la trajectoire prédite du véhicule afin d'obtenir une trajectoire de référence, une limite de trajectoire de référence, une vitesse de référence et une limite de vitesse de référence pour la conduite ou le stationnement ;
un module de planification (400) configuré pour appeler, en fonction du scénario décisionnel, un algorithme de planification adapté au scénario en cours, effectuer une planification de trajectoire sur la trajectoire de référence et la limite de trajectoire de référence au moyen de l'algorithme de planification afin de générer une trajectoire optimale pour la conduite ou le stationnement, et effectuer une planification de vitesse sur la vitesse de référence et la limite de vitesse de référence au moyen de l'algorithme de planification afin de générer une vitesse optimale pour la conduite ou le stationnement ; et
un module de commande (500) configuré pour appeler, en fonction du scénario décisionnel, un algorithme de commande adapté au scénario en cours et commander, au moyen de l'algorithme de commande selon la trajectoire optimale et la vitesse optimale, le véhicule pour exécuter une action de conduite prédéfinie ou une action de stationnement prédéfinie afin de réaliser une conduite autonome et/ou un stationnement autonome du véhicule.

2. Plateforme (10) selon la revendication 1, dans laquelle un module de reconnaissance de scénario destiné à déterminer un scénario décisionnel actuel en fonction d'un environnement de conduite du véhicule, le scénario décisionnel comprenant un scénario de suivi de voie, un scénario d'intersection, un scénario de conduite en garage, un scénario de stationnement en garage et un scénario de demi-tour, les scénarios appartenant à un type de scénario de décision de conduite et à un type de scénario de décision de stationnement, le type de scénario de décision de conduite comprenant le scénario de suivi de voie, le scénario d'intersection, le scénario de conduite en garage et le scénario de demi-tour, et le type de scénario de décision de stationnement comprenant le scénario de stationnement en garage, dans laquelle :
si le véhicule satisfait à une condition de scénario de demi-tour prédéfinie, le véhicule entre dans le scénario de demi-tour, puis un algorithme de prédiction, un algorithme de décision, un algorithme de planification et un algorithme de commande requis par le scénario de demi-tour sont appelés ;
si le véhicule satisfait à une condition de scénario d'intersection prédéfinie, le véhicule entre dans le scénario d'intersection, puis un algorithme de prédiction, un algorithme de décision, un algorithme de planification et un algorithme de commande requis par le scénario d'intersection sont appelés ;
si le véhicule satisfait à une condition de scénario de conduite en garage prédéfinie, le véhicule entre dans le scénario de conduite en garage, puis un algorithme de prédiction, un algorithme de décision, un algorithme de planification et un algorithme de commande requis par le scénario de conduite en garage sont appelés ; et
si le véhicule satisfait à une condition de scénario de stationnement prédéfinie, le véhicule entre dans le scénario de stationnement en garage, puis un algorithme de prédiction, un algorithme de décision, un algorithme de planification et un algorithme de commande requis par le scénario de stationnement en demi-tour sont appelés.

3. Plateforme (10) selon la revendication 1, dans laquelle le module de décision (300) comprend :
un sous-module de traitement, configuré pour déterminer, sur la base d'un type réel de carte, un ensemble de voies candidates, sélectionner dans cet ensemble une voie candidate satisfaisant une condition prédéfinie, déterminer un système de coordonnées candidat et une limite selon la voie candidate et une ligne de référence prédéfinie, établir une décision de règles de circulation prédéfinie selon le système de coordonnées candidat et la limite afin d'obtenir un résultat de décision de règles de circulation, et marquer un obstacle autour du véhicule afin d'obtenir un résultat de marquage horizontal et vertical dudit obstacle ; et
un sous-module de décision, configuré pour appeler, en fonction du scénario décisionnel, un algorithme de décision adapté au scénario en cours, prendre une décision concernant le résultat de règles de circulation et le résultat de marquage horizontal et vertical de l'obstacle au moyen de l'algorithme de décision, déterminer une contrainte de limite de trajectoire et une contrainte de limite de vitesse dans le système de coordonnées candidat, et effectuer une planification de trajectoire et une extraction de caractéristiques de trajectoire en fonction de la contrainte de limite de trajectoire et la contrainte de limite de vitesse afin d'obtenir une trajectoire de référence, une limite de trajectoire de référence, une vitesse de référence et une limite de vitesse de référence pour la conduite ou le stationnement du véhicule.

4. Plateforme (10) selon la revendication 3, dans laquelle le sous-module de traitement est spécialement configuré pour :
traiter des données prétraitées, si la carte est une carte haute définition prédéfinie, au moyen d'une stratégie fondée sur la carte haute définition et de correction d'informations perçues ; et
traiter des données prétraitées, si la carte est une carte participative prédéfinie, au moyen d'une stratégie combinant la carte participative prédéfinie avec les informations perçues, dans laquelle la carte participative prédéfinie constituant un profil d'informations routières préalable généré par combinaison d'éléments de trafic perçus en temps réel à plusieurs reprises.

5. Plateforme (10) selon la revendication 4, dans laquelle la stratégie de combinaison de la carte participative prédéfinie avec les informations perçues comprend :
déterminer les informations de voie de la voie actuelle du véhicule à partir des données prétraitées ;
effectuer une vérification de position selon les informations de voie et les informations perçues, déterminer un identifiant de voie de la voie actuelle du véhicule, rechercher une ligne médiane de référence de navigation à l'aide de l'identifiant de voie pour obtenir une séquence de trajectoire de référence, et déterminer, sur la base de la séquence de trajectoire de référence, une relation de position de points de ligne médiane de trajectoire de référence ;
effectuer une vérification croisée et une fusion selon les informations perçues et la relation de position de points de ligne médiane de trajectoire de référence afin d'obtenir une relation de ligne de voie gauche et droite de la voie actuelle, puis effectuer une vérification croisée et une fusion selon les informations perçues et de la relation de ligne de voie gauche et droite pour obtenir des informations d'extension d'attributs de voie ; et
effectuer une vérification croisée et une fusion selon les informations perçues, les informations d'extension d'attributs de voie, une séquence de points de ligne médiane et de ligne de limite de référence, produire une séquence de ligne médiane et de limite de référence, et déterminer, sur la base de la séquence de ligne médiane et de limite de référence, un ensemble de voies candidates.

6. Plateforme (10) selon la revendication 1, dans laquelle le module de prédiction (200) comprend :
un sous-module de prétraitement de données, configuré pour prétraiter les informations environnementales et les informations temporelles relatives à la cible ou à l'obstacle afin d'obtenir des informations cibles et des informations environnementales prétraitées ;
un sous-module d'ordonnancement de tâches, configuré pour appeler, en fonction des informations d'état de fonctionnement et du scénario décisionnel, un algorithme de prédiction adapté au scénario en cours ; et
un sous-module d'algorithme de prédiction, configuré pour exécuter, sur la base de l'algorithme de prédiction, une prédiction de destination, une prédiction d'intention et une prédiction de trajectoire fondée sur l'apprentissage profond sur les informations cibles et les informations environnementales prétraitées afin d'obtenir une destination prédite, une intention de cible et une trajectoire produite par modélisation, et pour obtenir, sur la base de la destination prédite et de l'intention de cible, une trajectoire générée par des règles ; exécuter un traitement de trajectoire sur la trajectoire produite par modélisation et sur la trajectoire produite par règles afin d'obtenir une trajectoire prédite d'une cible autour du véhicule.

7. Plateforme (10) selon la revendication 6, dans laquelle le sous-module d'ordonnancement de tâches est spécialement configuré pour :
appeler un algorithme de prédiction de conduite prédéfini si le véhicule se trouve dans un scénario prédéfini de suivi de voie, dans lequel le véhicule entrant dans ce scénario lorsque la distance qui le sépare d'une sortie de garage dans la direction de conduite est inférieure à un premier seuil ; et
appeler un algorithme de prédiction de scénario de conduite en garage prédéfini si le véhicule se trouve dans un scénario de conduite en garage prédéfini, dans lequel le véhicule entrant dans le scénario de conduite en garage lorsque la distance qui le sépare d'une entrée de garage dans la direction de conduite est inférieure à un second seuil.

8. Plateforme (10) selon la revendication 6, dans laquelle le module de prédiction (200) comprend en outre :
un sous-module de déclenchement de données, configuré pour déclencher et enregistrer des données de scénario prédéfinies et des données d'incidents, et télécharger les données déclenchées vers un serveur afin de réaliser une boucle fermée de données.

9. Plateforme (10) selon la revendication 1, dans laquelle le module de planification (400) comprend :
un sous-module de planification de trajectoire, configuré pour planifier un itinéraire optimal selon la trajectoire de référence, la limite de trajectoire de référence, la trajectoire prédite et les informations de position du véhicule ;
un sous-module de planification de vitesse, configuré pour planifier une vitesse optimale selon l'itinéraire optimal, la vitesse de référence et la limite de vitesse de référence.

10. Plateforme (10) selon la revendication 1, dans laquelle le module de commande (500) emploie une architecture de commande combinant une action anticipative et une rétroaction PID, et l'architecture de commande emploie un algorithme PID à double boucle doté d'un paramètre de changement dynamique.

11. Procédé de commande pour un véhicule autonome, dans lequel le procédé est appliqué à un véhicule, et servant à commander le véhicule afin de mettre en œuvre une fonction de conduite prédéfinie et une fonction de stationnement prédéfinie, le procédé comprenant les étapes suivantes :
acquérir des informations d'environnement local et des informations temporelles relatives à une cible ou à un obstacle perçues par le véhicule, ainsi que des informations d'état de fonctionnement et un scénario décisionnel du véhicule (S101) ;
appeler, selon les informations d'état de fonctionnement et du scénario décisionnel, un algorithme de prédiction adapté au scénario en cours et, sur la base de cet algorithme, effectuer une prédiction de trajectoire sur les informations d'environnement local et les informations temporelles relatives à la cible ou à l'obstacle afin de générer une trajectoire prédite d'une cible autour du véhicule (S102) ;
appeler, selon le scénario décisionnel, un algorithme de décision adapté au scénario en cours et, sur la base de l'algorithme de planification de décision, prendre une décision concernant les informations de carrosserie, une carte, les informations de position et la trajectoire prédite du véhicule afin d'obtenir une trajectoire de référence, une limite de trajectoire de référence, une vitesse de référence et une limite de vitesse de référence pour la conduite ou le stationnement (S103) ;
appeler, selon le scénario décisionnel, un algorithme de planification adapté au scénario en cours, effectuer une planification de trajectoire sur la trajectoire de référence et la limite de trajectoire de référence au moyen de l'algorithme de planification afin de générer une trajectoire optimale pour la conduite ou le stationnement, et effectuer une planification de vitesse sur la vitesse de référence et la limite de vitesse de référence au moyen de l'algorithme de planification afin de générer une vitesse optimale pour la conduite ou le stationnement (S104 ) ; et
appeler, selon le scénario décisionnel, un algorithme de commande adapté au scénario en cours et commander, au moyen de l'algorithme de commande selon la trajectoire optimale et la vitesse optimale, le véhicule pour exécuter une action de conduite prédéfinie ou une action de stationnement prédéfinie afin de réaliser une conduite autonome et/ou un stationnement autonome du véhicule (S105).

12. Véhicule (20) **caractérisé en ce qu'**il comprend :
un système de conduite autonome (600) ; et
une plateforme d'architecture logicielle pour un véhicule autonome (10) selon la revendication 1, dans lequel une fonction de conduite prédéfinie et une fonction de stationnement prédéfinie du système de conduite autonome partagent la même plateforme.

13. Support de stockage lisible par ordinateur comportant un programme informatique enregistré dessus, ledit programme étant exécuté par un processeur afin de mettre en œuvre le procédé de commande pour véhicule autonome selon la revendication 11.
